# EUROPÄISCHE PATENTSCHRIFT

(11) **EP 2 955 483 B1**
(45) Veröffentlichungstag und Bekanntmachung des Hinweises auf die Patenterteilung: **06.06.2018**
(21) Anmeldenummer: 15001133.6
(22) Anmeldetag: 17.04.2015
(51) Int. Cl.: B60W 30/14, G01C 21/34, G08G 1/0967

(54) **VERFAHREN ZUR BERECHNUNG EINER OPTIMALEN FAHRZEUGFÜHRUNG, INSBESONDERE NUTZFAHRZEUGFÜHRUNG**
METHOD FOR COMPUTING AN OPTIMAL VEHICLE GUIDANCE, IN PARTICULAR COMMERCIAL VEHICLE GUIDANCE
PROCÉDÉ DE CALCUL D'UNE CONDUITE OPTIMALE DE VÉHICULE, EN PARTICULIER D'UNE CONDUITE DE VÉHICULE UTILITAIRE

(30) Priorität: 11.06.2014 DE 102014008564
(43) Veröffentlichungstag der Anmeldung: 16.12.2015
(73) Patentinhaber: MAN Truck & Bus AG, 80995 München (DE)
(72) Erfinder: Völl, Sebastian, 85221 Dachau (DE); Schwertberger, Walter, 82278 Althegnenberg (DE); Römersperger, Xaver, 84453 Mühldorf (DE); Kraus, Sven, 85748 Garching (DE); Reule, Michael, 85354 Freising (DE)
(74) Vertreter: Liebl, Thomas

(56) Entgegenhaltungen:
- EP-A2- 1 484 581
- EP-A2- 1 890 110
- DE-B3-102005 035 431
- US-B1- 8 478 500

## Beschreibung

Die Erfindung betrifft ein Verfahren zur Berechnung einer optimalen Fahrzeugführung, insbesondere Nutzfahrzeugführung, nach dem Oberbegriff des Patentanspruches 1, ein Fahrerassistenzsystem, insbesondere einen Grüne-Welle-Assistenten und/oder einen Fahrzeug-Verzögerungs-Assistenten, zur Durchführung des Verfahrens nach Patentanspruch 14 sowie ein Fahrzeug mit dem Fahrerassistenzsystem nach Patentanspruch 15.
Moderne Fahrzeuge weisen regelmäßig Navigationssysteme auf, mittels denen einem Fahrer des Fahrzeuges eine, beispielsweise bezüglich Fahrzeit und/oder Fahrstrecke, optimierte Fahrroute angezeigt werden kann. Zur Berechnung dieser Fahrroute werden relevante wegstreckenbedingte Ereignisse berücksichtigt, beispielsweise Geschwindigkeitsbegrenzungen über definierte Fahrstreckenabschnitte, die Länge einzelner Fahrstreckenabschnitte oder die Befahrbarkeit bzw. Nutzbarkeit bestimmter Fahrstreckenabschnitte. Die Berechnung der optimierten Fahrroute erfolgt dabei üblicherweise mittels bekannter Pfadsuchalgorithmen, beispielsweise mit einem Dijkstra-Algorithmus oder mit einem A*-Algorithmus.
Aus der DE 196 21 437 A1 ist ein Navigationssystem bekannt, bei dem ein Dijkstra-Algorithmus zur Berechnung einer optimalen Fahrroute verwendet wird. Zur Verbesserung der Berechnung werden hier beispielsweise an Kreuzungen der Fahrroute Zwischensuchen durchführt, mittels denen der Zeit- und/oder Wegstrecken-Aufwand bezüglich der möglichen Anschlussstrecken der Kreuzungen berechnet wird. Dadurch kann die optimale Fahrroute mit einer deutlich erhöhten Wahrscheinlichkeit berechnet werden. DE 10 2005 035 431 B3 offenbart ein Verfahren zur Unterstützung eines Fahrzeugführers bei der Navigation in einem Straßennetz, wobei zur Ermittlung einer dem Fahrzeugführer vorzuschlagenden Fahrtroute und ihres optimalen Geschwindigkeitsverlaufs Geber-Daten bezüglich des Schaltzustandes oder Schaltverhaltens von Verkehrsampeln verwendet werden.

Ein ähnliches Verfahren ist auch aus der US 8478500 B1 bekannt.

Aufgabe der Erfindung ist es, ein Verfahren zur Berechnung einer optimalen Fahrzeugführung, insbesondere einer optimalen Nutzfahrzeugführung, bereitzustellen, bei dem die Optimierung der Fahrzeugführung auf einfache Weise verbessert bzw. erweitert ist und mittels dem eine besonders effektive Optimierung der Fahrzeugführung erreicht wird.
Diese Aufgabe wird durch die Merkmale der unabhängigen Ansprüche gelöst. Bevorzugte Weiterbildungen sind in den Unteransprüchen offenbart.
Die Erfindung betrifft ein Verfahren zur Berechnung einer optimalen Fahrzeugführung, insbesondere Nutzfahrzeugführung, bei dem mittels einer Recheneinrichtung ein Pfadsuchalgorithmus ausgeführt wird, mittels dem ein bezüglich wenigstens eines definierten Optimierungsparameters, insbesondere Lenkzeit und/oder Fahrzeug-Energieverbrauch, optimierter Pfad zwischen einem Startpunkt und/oder einem Zielpunkt eine Fahrstrecke ermittelt wird, wobei der optimierte Pfad in Abhängigkeit von verkehrsrelevanten wegstreckenbedingten Ereignissen berechnet wird. Erfindungsgemäß werden bei der Berechnung des optimierten Pfads auch verkehrsrelevante zeitbedingte Ereignisse berücksichtigt.

Auf diese Weise wird die Optimierung der Fahrzeugführung deutlich erweitert, da durch Berücksichtigung der zeitbedingten Ereignisse nicht nur allein die Fahrzeugroute, sondern beispielsweise auch die aktuelle Fahrzeuggeschwindigkeit und/oder Fahrzeugbeschleunigung auf der Wegstrecke optimiert werden kann. Dadurch kann beispielsweise der Fahrzeug-Energieverbrauch deutlich effektiver optimiert werden. Ebenso kann beispielsweise bei einem als Lastkraftwagen ausgebildeten Fahrzeug die Fahrzeugführung auch hinsichtlich einzuhaltender Lenkzeiten bzw. Ruhezeiten effektiver optimiert werden.

Konkret kann die Berechnung der optimalen Fahrzeugführung dabei beispielsweise derart erfolgen, dass zunächst in Abhängigkeit von wegstreckenbedingten Ereignissen eine bezüglich Fahrzeit und/oder Fahrstrecke optimierte Fahrroute berechnet wird, beispielsweise nach Art eines herkömmlichen Navigationssystems. Alternativ oder zusätzlich kann die voraussichtliche Fahrroute zumindest über eine bestimmte Wegstrecke hinweg auch abgeschätzt werden. Bei dieser Abschätzung kann beispielsweise die Straßenführung der aktuell befahrenen Straße berücksichtigt werden. Nach Berechnung und/oder Abschätzung der Fahrroute kann dann durch kombinierte Berücksichtigung von wegstreckenbedingten und zeitbedingten Ereignissen die Fahrzeugführung in erfindungsgemäßer Weise optimiert werden.

Die Daten über die verkehrsrelevanten zeitbedingten Ereignissen, beispielsweise die Zeitpunkte und Zeitintervalle, zu denen die zeitbedingten Ereignisse eintreten, können dabei beispielsweise über Funkverbindungen, beispielsweise über W-LAN, Mobilfunk oder ein Radiosignal, an das Fahrzeug übermittelt werden. Wie diese Übermittlung konkret erfolgen kann, wird im Folgenden noch detaillierter erläutert.

Bevorzugt können die zeitbedingten Ereignisse mittels, insbesondere visueller, Signal-Anzeigeeinrichtungen angezeigte, zeitgeregelte und/oder zeitgesteuerte Verkehrssignale sein. Diese zeitbedingten Ereignisse können besonders einfach berücksichtigt werden, da diese üblicherweise zu definierten Zeitpunkten und über definierte Zeitintervalle regelmäßig angezeigt werden. Die Signal-Anzeigeeinrichtungen können dabei beispielsweise als Lichtsignalanlagen und/oder als verlagerbare Schranken ausgebildet sein. Selbstverständlich sind die Signal-Anzeigeeinrichtungen nicht auf derartige Ausführungen beschränkt, sondern können jegliche Art von Signal-Anzeigeeinrichtungen, mittels denen zeitgeregelte und/oder zeitgesteuerte Verkehrssignale angezeigt werden, umfassen.

Die Daten bezüglich der zeitgeregelten und/oder zeitgesteuerten Verkehrssignale können dabei beispielsweise über Funksignale ausgehend von den Signal-Anzeigeeinrichtungen selbst an das Fahrzeug übermittelt werden. Alternativ und/oder zusätzlich können die Daten bezüglich der zeitgeregelten und/oder zeitgesteuerten Verkehrssignale auch von Verkehrsleitzentralen an das Fahrzeug übermittelt werden.

Weiter bevorzugt können als zeitbedingte Ereignisse auch nicht zeitgesteuerte und/oder nicht zeitgeregelte Ereignisse berücksichtigt werden, insbesondere Verkehrsstaus und/oder kurzzeitige Straßensperrungen. Dadurch kann die Fahrzeugführung auch an nicht vorhersehbare, plötzlich auftretende zeitbedingte Ereignisse angepasst werden. Beispielsweise kann so bei einem auf der Fahrstrecke folgenden Verkehrstau die Fahrzeug-Geschwindigkeit bereits deutlich früher bzw. in größerer Entfernung zu dem Verkehrsstau gedrosselt und so der Fahrzeug-Energieverbrauch verringert werden. Die Daten bezüglich der nicht zeitgesteuerten und/oder nicht zeitgeregelten Ereignisse können dabei beispielsweise von Verkehrsleitzentralen und/oder aus dem Internet eingeholt werden.

In einer bevorzugten konkreten Verfahrensführung ist der definierte Optimierungsparameter eine Fahrtdauer und/oder eine Lenkzeit und/oder ein Fahrzeug-Energieverbrauch und/oder Verschleißkosten wenigstens eines Fahrzeug-Bremssystems, insbesondere einer Betriebsbremsanlage und/oder einer Feststell-Bremsanlage. Im Falle mehrere Optimierungsparameter können die einzelnen Optimierungsparameter auch gewichtet werden, um die gewünschte Optimierung der Fahrzeugführung sicherstellen zu können.

Weiter bevorzugt ist der Pfadsuchalgorithmus ein Dijkstra- und/oder ein A*-Algorithmus. Diese erweisen sich nach erfinderseitiger Einschätzung als besonders geeignet für das erfindungsgemäße Verfahren.

Vorzugsweise kann das Eintreten und/oder die Passierbarkeit der wegstreckenbedingten und/oder zeitbedingten Ereignisse mittels der Recheneinrichtung auch statistisch bewertet werden, um die Genauigkeit der Berechnung zu erhöhen bzw. die Optimierung der Fahrzeugführung zu verbessern. Dadurch können beispielsweise verkehrsabhängige Schaltzeiten von Lichtsignalanlagen besser berücksichtigt werden.
Vorzugsweise wird bei der Berechnung der optimierten Fahrzeugführung wenigstens ein die Fahrzeug-Geschwindigkeit festlegender und/oder einschränkender Geschwindigkeits-Parameter, insbesondere wenigstens ein fahrzeugbedingter und/oder fahrstreckenbedingter Geschwindigkeits-Parameter, berücksichtigt, wobei bevorzugt vorgesehen ist, dass der Geschwindigkeits-Parameter die maximal und/oder minimal zu fahrenden Geschwindigkeit und/oder fahrdynamische Fahrzeug-Eigenschaften und/oder die Kurvigkeit der Fahrstrecke ist. Dadurch kann die Optimierung der Fahrzeugführung weiter verbessert werden bzw. eine realistische, verkehrssichere und vorschriftsmäßige Fahrzeugführung ermittelt werden. Alternativ und/oder zusätzlich können bei Berechnung der optimierten Fahrzeugführung wenigstens ein die Fahrzeug-Beschleunigung einschränkender Beschleunigungs-Parameter, insbesondere wenigstens ein fahrzeugbedingter und/oder fahrstreckenbedingter Beschleunigungs-Parameter, berücksichtigt werden, wobei bevorzugt vorgesehen ist, dass der Beschleunigungs-Parameter fahrdynamische Fahrzeug-Eigenschaften und/oder die Geschwindigkeit und/oder Beschleunigung wenigstens eines vorausfahrenden Fahrzeuges und/oder ein Fahrkomfort-Parameter ist. So kann die Fahrzeugführung, insbesondere unter Berücksichtigung des Fahrkomforts und des Fahrzeug-Energieverbrauch, weiter optimiert werden. Erfindungsgemäß wird der optimierte Pfad mittels des Pfadsuchalgorithmus in einem Weg-Zeit-Zustandsraum ermittelt, in dem ein fest definierter oder adaptiv anpassbarer Wegbereich und ein fest definierter oder adaptiv anpassbarer Zeitbereich mit definierten Auflösungen diskretisiert sind, wobei das Fahrzeug zumindest einen Teil der Zustände in dem Zustandsraum einnehmen kann, wobei der Pfad durch Verknüpfung einnehmbarer Zustände ermittelt wird, und wobei der der Start-Zustand der Berechnung die aktuelle Position des Fahrzeuges auf der Fahrstrecke ist. Die Verwendung des Weg-Zeit-Zustandsraums hat, beispielsweise gegenüber einem Geschwindigkeit-Zeit-Zustandsraum, den wesentlichen Vorteil, dass die wegstreckenbedingten und zeitbedingten Ereignisse unmittelbar bzw. ohne Umrechnung in dem Weg-Zeit-Zustandsraum berücksichtigt werden können. Dadurch wird die Berechnung der optimalen Fahrzeugführung deutlich vereinfacht und die Rechenzeit verkürzt. Die definierten Auflösungen sind dabei derart zu wählen, dass die Berechnung ausreichend schnell und gleichzeitig auch mit ausreichender bzw. mit gewünschter Genauigkeit durchgeführt werden kann.

Bevorzugt können die wegstreckenbedingten und/oder zeitbedingten Ereignisse dabei zumindest näherungsweise den Zuständen des Weg-Zeit-Zustandsraums zugeordnet werden, um die Ereignisse auf einfache Weise in dem Weg-Zeit-Zustandsraum zu berücksichtigen. Vorzugsweise wird zudem der wenigstens eine Optimierungsparameter den Kanten zwischen den Zuständen zugeordnet, um den wenigstens einen Optimierungsparameter auf einfache Weise und bei der gewählten Auflösung mit ausreichender Genauigkeit zu berücksichtigen. Der Optimierungsparameter kann dabei beispielsweise derart den Kanten zugeordnet sein, dass er abhängig von der Kantensteigung positiv oder negativ beeinflusst wird. Weiter bevorzugt sind die Kanten zwischen den Zuständen geradlinig ausgebildet, um die Berechnung zu vereinfachen und somit die Rechenzeit zu verkürzen.

Bevorzugt ist das Zeitintervall, in dem die Berechnung ausgeführt wird, gleich oder kürzer, insbesondere um ein Vielfaches kürzer, als das Zeitintervall von einem bei der Pfadsuche einnehmbaren Pfad-Zustand zum nächstfolgenden Pfad-Zustand des Weg-Zeit-Zustandsraums. Auf diese Weise kann die aktuelle Position des Fahrzeuges auf der Fahrstrecke zumindest einmal zwischen zwei aufeinanderfolgenden Pfad-Zuständen aktualisiert und somit eine hohe Rechengenauigkeit sichergestellt werden. Sofern das Zeitintervall, in dem die Berechnung ausgeführt wird, um ein Vielfaches kürzer ist, als das Zeitintervall zwischen zwei aufeinanderfolgenden Pfad-Zuständen, kann die Berechnung vorzugsweise auch mehrmals in dem Zeitintervall zwischen zwei aufeinanderfolgenden Pfad-Zuständen durchgeführt werden, um die Rechengenauigkeit weiter zu erhöhen.

Weiter bevorzugt ist das durch die Auflösung bestimmte Zeitintervall von einem Zustand zum nächstfolgenden Zustand des Weg-Zeit-Zustandsraums, gleich oder kürzer, insbesondere um ein Vielfaches kürzer ist, als das Zeitintervall von einem bei der Pfadsuche einnehmbaren Pfad-Zustand zum nächstfolgenden Pfad-Zustand des Weg-Zeit-Zustandsraums. Auf diese Weise kann die Rechenzeit zur Ausführung des Pfadsuchalgorithmus verkürzt werden und es können auch weiterhin ausreichend niedrige Geschwindigkeiten und Beschleunigungen berücksichtigt werden.

Vorzugsweise werden dem Startzustand des Pfadsuchalgorithmus die aktuelle Fahrzeug-Geschwindigkeit zugeordnet und ausgehend von dieser Fahrzeug-Geschwindigkeit mittels der Recheneinrichtung die Fahrzeug-Geschwindigkeiten an zumindest einem Teil der weiteren Zustände des Weg-Zeit-Zustandsraums ermittelt, wobei bevorzugt vorgesehen ist, das aus diesen Fahrzeug-Geschwindigkeiten die Fahrzeug-Beschleunigungen zwischen zumindest einem Teil dieser Zustände ermittelt werden. So können die möglichen Fahrzeug-Geschwindigkeiten und die Fahrzeug-Beschleunigungen des Weg-Zeit-Zustandsraums auf besonders einfache Weise berechnet werden. Konkret können die Fahrzeug-Geschwindigkeiten an den weiteren Zuständen beispielsweise unter Berücksichtigung der Lage der Zustände in dem Weg-Zeit-Zustandsraum berechnet werden. Bevorzugt kann zudem bei dem Pfadsuchalgorithmus wenigstens ein Zustand mehrfach überprüft bzw. auf unterschiedlichen Pfaden angefahren werden, um die optimale Fahrzeug-Geschwindigkeit an diesem Zustand zu ermitteln.

Bevorzugt wird zudem, zeitlich und/oder örtlich gesehen, im Bereich eines noch folgenden wegstrecken- und/oder zeitbedingten Ereignisses mittels der Recheneinrichtung eine Zwischensuche durchgeführt, mittels der die in diesem Bereich optimale Fahrzeugführung ermittelt wird. Mittels der Zwischensuche kann die Rechengenauigkeit der Berechnung deutlich erhöht werden. Bevorzugt kann dabei mittels der Zwischensuche die optimale Fahrzeug-Geschwindigkeit und/oder Fahrzeug-Beschleunigung in diesem Bereich ermittelt werden.

Ferner wird ein Fahrerassistenzsystem, insbesondere ein Grüne-Welle-Assistent und/oder ein Fahrzeug-Verzögerungs-Assistent, zur Durchführung des erfindungsgemäßen Verfahrens und/oder ein Fahrzeug, insbesondere ein Nutzfahrzeug, mit dem erfindungsgemäßen Fahrerassistenzsystem beansprucht. Die sich hieraus ergebenden Vorteile sind identisch mit den bereits gewürdigten Vorteilen der erfindungsgemäßen Verfahrensführung, so dass diese hier nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend von Zeichnungen näher erläutert.

Es zeigen:
- Fig. 1: eine schematische Darstellung einer Verkehrssituation, anhand der die Funktionsweise des erfindungsgemäßen Verfahrens erläutert wird;
- Fig. 2: ein Diagramm, anhand dem die Berechnung einer optimalen Fahrzeugführung erläutert wird;
- Fig. 3: ein Diagramm, in dem eine zeitoptimierte Fahrzeugführung gezeigt ist; und
- Fig. 4: ein Diagramm, in dem eine energieoptimierte Fahrzeugführung gezeigt ist.

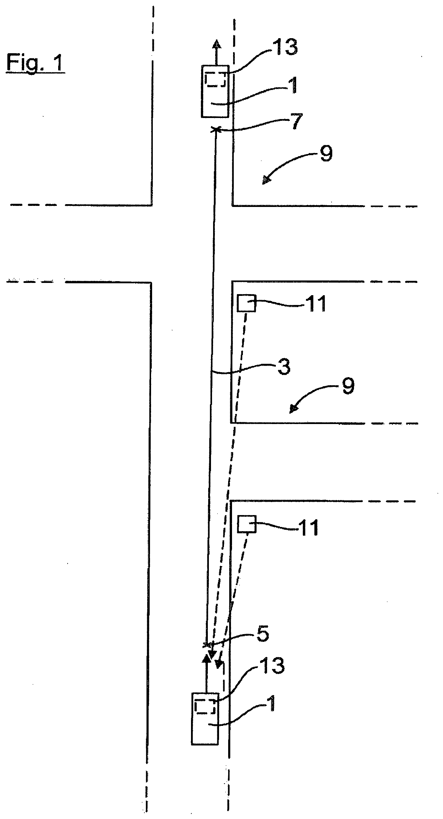

In Fig. 1 ist schematisch und beispielhaft eine Straßenverkehrssituation gezeigt, bei der das erfindungsgemäße Verfahren zur Berechnung einer optimalen Fahrzeugführung angewendet werden kann. Dabei ist ein Fahrzeug 1 gezeigt, das auf einer Fahrstrecke 3 von einem Startpunkt 5 hin zu einem Zielpunkt 7 gefahren wird. Zwischen dem Startpunkt 5 und dem Zielpunkt 7 befinden sich hier beispielhaft zwei Kreuzungen 9, wobei an jeder Kreuzung 9 jeweils eine Lichtsignalanlage 11 installiert ist, mittels der dem Fahrer des Fahrzeuges 1 angezeigt wird, ob er die jeweilige Kreuzung 9 passieren darf oder nicht. Die Lichtsignalanlagen 11 können dabei beispielsweise fest eingestellte, tageszeitabhängige oder von Verkehrsleitzentralen gesteuerte bzw. geregelte Schaltzeiten aufweisen. Ebenso wäre es beispielsweise aber auch denkbar, dass die Lichtsignalanlagen 11 ihre Schaltzeiten dem Verkehrsaufkommen entsprechend selbstständig anpassen. Selbstverständlich können die Lichtsignalanlagen 11 auch auf jede andere erdenkliche Weise zeitlich geregelt bzw. gesteuert werden.
Wie in Fig. 1 weiter gezeigt ist, weist das Fahrzeug 1 ein mit gestrichelten Linien angedeutetes Fahrerassistenzsystem 13 auf, das mit den Lichtsignalanlagen 11 beispielsweise über W-LAN oder Mobilfunk, derart in Funkverbindung ist, dass Daten bezüglich der Schaltzeiten der Lichtsignalanlagen 11 an das Fahrzeug 1 übermittelt werden. Das Fahrerassistenzsystem 13 weist eine Fahrzeugnavigation auf, mittels der dem Fahrer des Fahrzeuges 1 eine beispielsweise bezüglich Fahrstrecke und/oder Fahrzeit optimierte Fahrroute zum Erreichen eines definierten Fahrziels angezeigt werden kann. In Fig. 1 wird der Fahrer des Fahrzeuges 1 von der Fahrzeugnavigation entlang der Fahrstrecke 3 geführt. Des Weiteren wird mittels des Fahrerassistenzsystems 13 auch erfasst, wie groß die Entfernungen des Fahrzeuges 1 zu den Kreuzungen 9 auf der Fahrstrecke 3 sind. Alternativ könnte die voraussichtliche Fahrroute zumindest über eine bestimmte Wegstrecke hinweg auch abgeschätzt werden. Bei dieser Abschätzung können beispielsweise die Straßenführung der aktuell befahrenen Straße und/oder die Straßenführungen in einem definierten festgelegten Bereich um das Fahrzeug 1 herum berücksichtigt werden.

Mit den Daten zu den zeitbedingten Ereignissen bzw. zu den Schaltzeiten der Lichtsignalanlagen 11 und den Daten zu den wegstreckenbedingten Ereignissen bzw. zu den Entfernungen der Kreuzungen 9 kann durch das Fahrerassistenzsystem 13 bezüglich wenigstens einen definierten Optimierungsparameters, beispielsweise einer Lenkzeit und/oder eines Fahrzeug-Energieverbrauchs und/oder Verschleißkosten wenigstens eines Fahrzeugbremssystems, die optimale Fahrzeugführung auf der Fahrstrecke 3 berechnet werden. Im Falle mehrerer Optimierungsparameter kann dabei auch vorgesehen sein, dass die einzelnen Optimierungsparameter zueinander gewichtet werden.
Die Optimierung der Fahrzeugführung wird hier beispielhaft bezüglich der aktuellen Fahrzeug-Geschwindigkeit durchgeführt. Ebenso kann die Optimierung der Fahrzeugführung beispielsweise aber auch bezüglich der aktuellen Fahrzeug-Beschleunigung oder aber auch die Fahrroute durchgeführt werden. Bei der in Fig. 1 gezeigten Verkehrssituation kann die Fahrzeug-Geschwindigkeit zum Erreichen eines minimalen Fahrzeug-Energieverbrauchs dabei beispielsweise derart berechnet werden, dass das Fahrzeug 1 die Kreuzungen 9 ohne Anhalten passieren kann. Je nach Schaltzeiten der Lichtsignalanlagen 11 und Entfernungen zu den Kreuzungen 9 muss der Fahrer des Fahrzeuges 1 daher beispielsweise die aktuelle Fahrzeug-Geschwindigkeit erhöhen, beibehalten oder verringern. Die vorteilhafte aktuelle Fahrzeug-Geschwindigkeit wird dem Fahrer des Fahrzeuges 1 dabei mittels einer geeigneten, insbesondere visuellen, Anzeigeeinrichtung des Fahrerassistenzsystems 13 angezeigt. Des Weiteren werden bei der Berechnung der optimalen Fahrzeugführung mittels des Fahrerassistenzsystems 13 bevorzugt auch fahrzeugbedingte und fahrstreckenbedingte Geschwindigkeits-Parameter, wie beispielsweise die maximal und die minimal auf der Fahrstrecke 3 vorgeschriebene Geschwindigkeit, fahrdynamische Fahrzeug-Eigenschaften und die Kurvigkeit der Fahrstrecke, berücksichtigt. So kann eine realitätsnahe, verkehrssichere und vorschriftsmäßige optimale Fahrzeugführung berechnet werden. Vorzugsweise können bei der Berechnung der optimalen Fahrzeugführung auch fahrzeugbedingte und fahrstreckenbedingte Beschleunigungs-Parameter, wie die Geschwindigkeit und die Beschleunigung wenigstens eines vorausfahrenden Fahrzeuges sowie Fahrkomfort-Parameter, berücksichtigt werden, um eine verkehrssichere und komfortable Fahrzeugführung sicherzustellen.

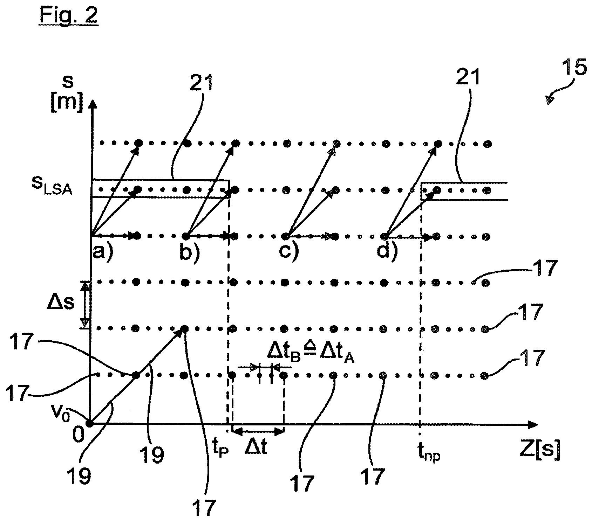

In Fig. 2 ist ein Weg-Zeit-Diagramm 15 gezeigt, anhand dem die Berechnung der optimalen Fahrzeugführung in einem Weg-Zeit-Zustandsraum erläutert wird. Der Ursprung des Weg-Zeit-Diagramms 15 bzw. der Start-Zustand der Berechnung entspricht dabei der aktuellen Position des Fahrzeuges 1 auf der Fahrstrecke 3. Ausgehend von dem Ursprung erstreckt sich das Weg-Zeit-Diagramm 15 über einen fest definierten oder adaptiv anpassbaren Wegbereich der Fahrstrecke 3 und einen fest definierten oder adaptiv anpassbaren Zeitbereich, in dem das Fahrzeug 1 zumindest einen Teil der Fahrstrecke 3 abfahren kann. Der definierte Wegbereich und der definierte Zeitbereich sind dabei mit einer definierten Auflösung in Wegintervalle Δs und Zeitintervalle Δt_{A} derart eingeteilt bzw. diskretisiert, dass das Fahrzeug 1 zumindest einen Teil von den in Fig. 2 mit dicken und dünnen Punkten dargestellten Zuständen 17 einnehmen kann.

Des Weiteren wird dem Ursprung des Weg-Zeit-Diagramms 15 bei der Berechnung die aktuelle Fahrzeug-Geschwindigkeit zugeordnet. Ausgehend von dieser Fahrzeug-Geschwindigkeit können mittels des Fahrerassistenzsystems 13 die möglichen Fahrzeug-Geschwindigkeiten an den weiteren Zuständen 17 des Weg-Zeit-Diagramms 15 berechnet werden. Zudem können mittels des Fahrerassistenzsystems 13 aus den Fahrzeug-Geschwindigkeiten auch die durchschnittlichen Fahrzeug-Beschleunigungen zwischen den Zuständen 17 berechnet werden. Mittels der berechneten Fahrzeug-Geschwindigkeiten und den Fahrzeug-Beschleunigungen wird durch das Fahrerassistenzsystem 13 ermittelt, welche Zustände 17 in Abhängigkeit der bereits erläuterten fahrzeugbedingten und fahrstreckenbedingten Geschwindigkeits- und Beschleunigungs-Parameter von dem Fahrzeug 1 eingenommen werden können.

Die Berechnung des optimalen Pfads in dem Weg-Zeit-Diagramm 15 bzw. die optimale Verknüpfung der einzelnen Zustände 17 des Weg-Zeit-Diagramms 15 erfolgt mittels eines geeigneten Pfadsuchalgorithmus, vorzugsweise einem Dijkstra- und/oder einem A*-Algorithmus. Das durch die Auflösung bestimmte Zeitintervall Δt_{A} von einem Zustand zum nächstfolgenden Zustand des Weg-Zeit-Zustandsraums ist hier beispielhaft um ein Vielfaches kürzer, als das Zeitintervall Δt zwischen zwei unmittelbar aufeinanderfolgenden bei der Pfadsuche einnehmbaren, hier mit dickem Punkten dargestellten Pfad-Zuständen 17 des Weg-Zeit-Zustandsraums. Dadurch kann die Rechenzeit zur Ausführung des Pfadsuchalgorithmus verkürzt werden und es können auch weiterhin ausreichend niedrige Geschwindigkeiten und Beschleunigungen berücksichtigt werden.

Die Verknüpfung der einzelnen Zustände 17 erfolgt mittels Kanten 19, die hier beispielhaft geradlinig ausgebildet sind. Ebenso wäre es beispielsweise aber auch denkbar, dass zumindest ein Teil der Zustände 17 mit gekrümmten Kanten 19 verbunden wird, um Fahrzeug-Geschwindigkeiten und Fahrzeug-Beschleunigungen realitätsnäher berücksichtigen zu können. Weiter wird den Kanten 19 des Weg-Zeit-Diagramms 5 hier beispielhaft der wenigstens eine Optimierungsparameter, bezüglich dem die optimale Fahrzeugführung berechnet wird, derart zugeordnet, dass sich für bestimmte Kanten-Steigungen eine bezüglich des wenigstens einen definierten Optimierungsparameters vorteilhafte oder nachteilhafte Fahrzeugführung ergibt. Durch die Auswahl geeigneter Kanten 19 bzw. von Zuständen 17 kann die optimale Fahrzeugführung berechnet werden.

Wie aus Fig. 2 weiter hervorgeht, können in dem Weg-Zeit-Diagramm 15 wegstrecken- und zeitbedingte Ereignisse 21 besonders einfach berücksichtigt werden. In Fig. 2 ist beispielhaft die Nicht-Passierbarkeit der ersten auf der Fahrstrecke 3 des Fahrzeuges 1 folgenden Lichtsignalanlage 11 als Ereignisse 21 eingetragen. Die Lichtsignalanlage 11 ist dabei eine Wegstrecke s_{LSA} von dem Fahrzeug 1 entfernt, ab einem Zeitpunkt tₚ passierbar und ab einem zeitlich nach dem Zeitpunkt tₚ folgenden Zeitpunkt tₙₚ wiederum nicht mehr passierbar.

Bei der Berechnung der optimalen Fahrzeugführung wird optional auch eine, ebenfalls in Fig. 2 gezeigte, Zwischensuche durchgeführt, mittels der im Bereich eines, zeitlich und/oder örtlich gesehen, noch folgenden Ereignisses die optimale Fahrzeugführung ermittelt wird. Beispielhaft wird die Zwischensuche in Fig. 2 im Bereich der Ereignisse 21 durchgeführt. Ausgehend von definierten, örtlich gesehen, unmittelbar vor den Ereignissen 21 liegenden Zuständen 17 werden dabei Fallunterscheidungen a) bis d) bezüglich der hier optimalen Fahrzeug-Zustände und Fahrzeugführungen durchgeführt. Im Fall a) sind dabei sowohl eine bevorzugte höhere Geschwindigkeit als auch eine bevorzugte niedrigere Geschwindigkeit nicht geeignet, um das Ereignis 21 zu passieren. Im Fall b) kann das Ereignis 21 mit der höheren Geschwindigkeit nicht passiert werden, jedoch mit der niedrigeren Geschwindigkeit. Im Fall c) können die Ereignisse 21 sowohl mit der höheren als auch mit der niederen Geschwindigkeit passiert werden. Im Fall d) kann das Ereignis 21 mit der höheren Geschwindigkeit passiert werden, jedoch nicht mit der niedrigeren Geschwindigkeit. Mittels einer derartigen Zwischensuche kann die Optimierung der Fahrzeugführung deutlich verbessert werden.

Weiterhin ist das Zeitintervall Δt_{B}, in dem die Berechnung ausgeführt wird, hier lediglich beispielhaft, sehr viel kleiner als das Zeitintervall Δt zwischen zwei aufeinanderfolgenden Pfad-Zuständen 17. Auf diese Weise kann die Berechnung in dem Zeitintervall Δt mehrfach durchgeführt werden und somit die aktuelle Position des Fahrzeuges auf der Fahrstrecke in dem Zeitintervall Δt mehrfach aktualisiert werden. Dadurch wird eine besonders hohe Rechengenauigkeit erreicht. In der gezeigten bevorzugten Ausführung entspricht dabei das Zeitintervall Δt_{B} der Berechnung dem durch die Auflösung bestimmten Zeitintervall Δt_{A}.

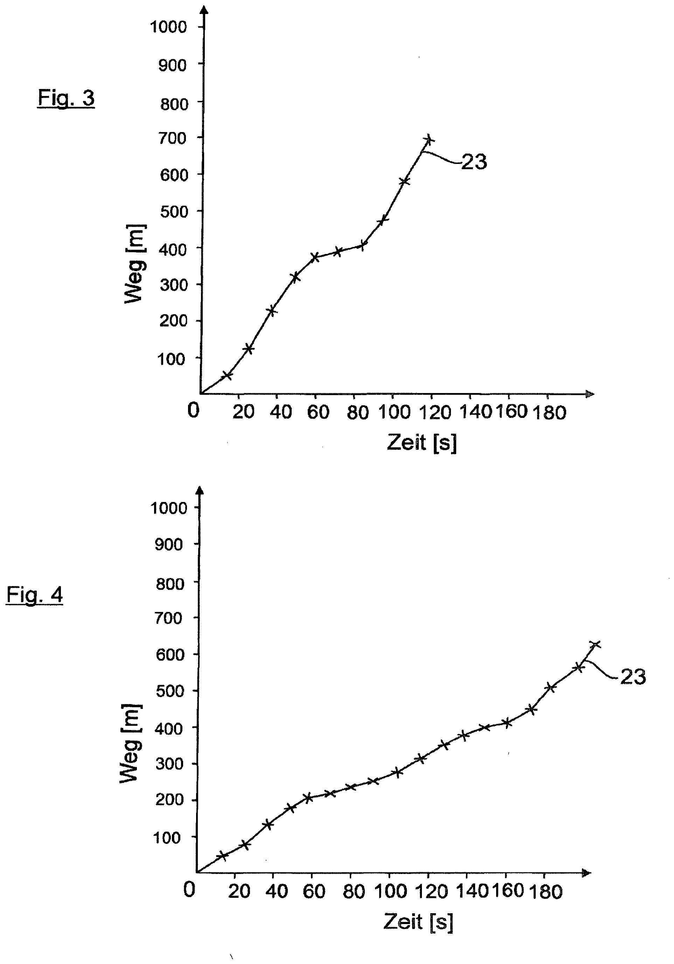

In den Fig. 3 und 4 ist jeweils ein Diagramm mit einer berechneten optimierten Fahrzeugführung 23 gezeigt, wobei die Berechnungen hier bezüglich unterschiedlicher Optimierungsparameter durchgeführt wurden. In Fig. 3 wurde die Berechnung der optimierten Fahrzeugführung 23 zeitoptimiert durchgeführt, das heißt, das eine definierte Fahrstrecke in möglichst geringer Zeit zurückgelegt werden soll. In Fig. 4 wurde die Berechnung energieoptimiert durchgeführt, so dass das Fahrzeug hier die definierte Fahrstrecke mit einem möglichst geringen Energieverbrauch zurücklegen soll. Aus den Fig. 3 und 4 geht dabei hervor, dass sich die berechneten optimierten Fahrzeugführungen 23 in Abhängigkeit von den gewählten Optimierungsparametern deutlich unterscheiden.

### Bezugszeichenliste

- 1: Fahrzeug
- 3: Fahrstrecke
- 5: Startpunkt
- 7: Zielpunkt
- 9: Kreuzung
- 11: Lichtsignalanlage
- 13: Fahrerassistenzsystem
- 15: Weg-Zeit-Diagramm
- 17: Zustand
- 19: Kante
- 21: Ereignis
- 23: optimierte Fahrzeugführung
- s_{LSA}: Wegstrecke Lichtsignalanlage
- tₙₚ: Zeitpunkt Nicht-Passieren
- tₚ: Zeitpunkt Passieren
- v₀: aktuelle Fahrzeug-Geschwindigkeit
- Δs: Wegintervall der Diskritisierung
- Δt: Zeitintervall zwischen zwei aufeinanderfolgenden Pfad-Zuständen
- Δt_{A}: Zeitintervall der Diskritisierung
- Δt_{B}: Zeitintervall der Berechnung

## Patentansprüche

1. Verfahren zur Berechnung einer optimalen Fahrzeugführung, insbesondere Nutzfahrzeugführung, bei dem mittels einer Recheneinrichtung (13) ein Pfadsuchalgorithmus ausgeführt wird, mittels dem ein bezüglich wenigstens eines definierten Optimierungsparameters optimierter Pfad zwischen einem Startpunkt (5) und einem Zielpunkt (7) einer Fahrstrecke (3) ermittelt wird, wobei der optimierte Pfad (23) in Abhängigkeit von verkehrsrelevanten wegstreckenbedingten Ereignissen (21) berechnet wird, wobei bei der Berechnung des optimierten Pfads (23) auch verkehrsrelevante zeitbedingte Ereignisse (21) berücksichtigt werden, **dadurch gekennzeichnet, dass** der optimierte Pfad (23) mittels des Pfadsuchalgorithmus in einem Weg-Zeit-Zustandsraum ermittelt wird, in dem ein fest definierter oder adaptiv anpassbarer Wegbereich und ein fest definierter oder adaptiv anpassbarer Zeitbereich mit einer definierten Auflösung diskretisiert sind, wobei das Fahrzeug (1) zumindest einen Teil der Zustände (17) in dem Weg-Zeit-Zustandsraum einnehmen kann, wobei der Pfad (23) durch Verknüpfung einnehmbarer Zustände (17) ermittelt wird, und wobei der Start-Zustand (17) der Berechnung die aktuelle Position des Fahrzeuges (1) auf der Fahrstrecke (3) ist.

2. Verfahren nach Anspruch 1, **dadurch gekennzeichnet, dass** als zeitbedingte Ereignisse (21) mittels, insbesondere visueller, Signal-Anzeigeeinrichtungen (11) angezeigte, zeitgeregelte und/oder zeitgesteuerte Verkehrssignale berücksichtigt werden, wobei bevorzugt vorgesehen ist, dass die Signal-Anzeigeeinrichtungen (11) als Lichtsignalanlagen und/oder als verlagerbare Schranken ausgebildet sind.

3. Verfahren nach Anspruch 1 oder 2, **dadurch gekennzeichnet, dass** als zeitbedingte Ereignisse (21) nicht zeitgesteuerte und/oder nicht zeitgeregelte Ereignisse berücksichtigt werden, insbesondere Verkehrsstaus und/oder kurzzeitige Straßensperrungen.

4. Verfahren nach einem der vorhergehenden Ansprüche, **dadurch gekennzeichnet, dass** der definierte Optimierungsparameter eine Fahrtdauer und/oder eine Lenkzeit und/oder ein Fahrzeug-Energieverbrauch und/oder Verschleißkosten wenigstens eines Fahrzeug-Bremssystems, insbesondere einer Betriebsbremsanlage und/oder einer Feststellbremsanlage, ist, und/oder dass, im Falle mehrerer Optimierungsparameter, die einzelnen Optimierungsparameter gewichtet werden.

5. Verfahren nach einem der vorhergehenden Ansprüche, **dadurch gekennzeichnet, dass** der Pfadsuchalgorithmus ein Dijkstra- und/oder ein A*-Algorithmus ist.

6. Verfahren nach einem der vorhergehenden Ansprüche, **dadurch gekennzeichnet, dass** das Eintreten und/oder die Passierbarkeit der wegstreckenbedingten und/oder zeitbedingten Ereignisse (21) statistisch bewertet wird.

7. Verfahren nach einem der vorhergehenden Ansprüche, **dadurch gekennzeichnet, dass** bei der Berechnung der optimierten Fahrzeugführung wenigstens ein die Fahrzeug-Geschwindigkeit festlegender und/oder einschränkender Geschwindigkeits-Parameter, insbesondere wenigstens ein fahrzeugbedingter und/oder fahrstreckenbedingter Geschwindigkeits-Parameter, berücksichtigt wird, wobei bevorzugt vorgesehen ist, dass der Geschwindigkeits-Parameter die maximal und/oder minimal zu fahrende Geschwindigkeit und/oder fahrdynamische Fahrzeug-Eigenschaften und/oder die Kurvigkeit der Fahrstrecke (3) ist.

8. Verfahren nach einem der vorhergehenden Ansprüche, **dadurch gekennzeichnet, dass** bei der Berechnung der optimierten Fahrzeugführung wenigstens ein die Fahrzeug-Beschleunigung einschränkender Beschleunigungs-Parameter, insbesondere wenigstens ein fahrzeugbedingter und/oder fahrstreckenbedingter Beschleunigungs-Parameter, berücksichtigt wird, wobei bevorzugt vorgesehen ist, dass der Beschleunigungs-Parameter fahrdynamische Fahrzeug-Eigenschaften und/oder die Geschwindigkeit und/oder die Beschleunigung wenigstens eines vorausfahrenden Fahrzeuges und/oder ein Fahrkomfort-Parameter ist.

9. Verfahren nach einem der vorhergehenden Ansprüche, **dadurch gekennzeichnet, dass** die wegstreckenbedingten und/oder zeitbedingten Ereignisse (21) zumindest näherungsweise den Zuständen (17) des Weg-Zeit-Zustandsraums zugeordnet werden, und/oder dass der wenigstens eine Optimierungsparameter den Kanten (19) zwischen den Zuständen (17) zugeordnet wird, und/oder dass die Kanten (19) zwischen den Zuständen (17) geradlinig ausgebildet sind.

10. Verfahren nach einem der vorhergehenden Ansprüche, **dadurch gekennzeichnet, dass** das Zeitintervall (Δt_{B}), in dem die Berechnung ausgeführt wird, gleich oder kürzer ist, insbesondere um ein Vielfaches kürzer ist, als das Zeitintervall (Δt) von einem bei der Pfadsuche einnehmbaren Pfad-Zustand (17) zum nächstfolgenden Pfad-Zustand (17) des Weg-Zeit-Zustandsraums, und /oder dass das durch die Auflösung bestimmte Zeitintervall (Δt_{A}) von einem Zustand (17) zum nächstfolgenden Zustand (17) des Weg-Zeit-Zustandsraums, gleich oder kürzer ist, insbesondere um ein Vielfaches kürzer ist, als das Zeitintervall (Δt) von einem bei der Pfadsuche einnehmbaren Pfad-Zustand (17) zum nächstfolgenden bei der Pfadsuche einnehmbaren Pfad-Zustand (17) des Weg-Zeit-Zustandsraums, wobei bevorzugt vorgesehen ist, dass, sofern das Zeitintervall (Δt_{B}) der Berechnung um ein Vielfaches kürzer als das Zeitintervall (Δt) zwischen zwei aufeinanderfolgenden Pfad-Zuständen (17) ist, die Berechnung mehrmals in diesem Zeitintervall (Δt) durchgeführt wird.

11. Verfahren nach einem der vorhergehenden Ansprüche, **dadurch gekennzeichnet, dass** dem Start-Zustand (17) des Pfadsuchalgorithmus die aktuelle Fahrzeug-Geschwindigkeit zugeordnet wird, und dass ausgehend von dieser Fahrzeug-Geschwindigkeit mittels der Recheneinrichtung (13) die Fahrzeug-Geschwindigkeiten an zumindest einem Teil der weiteren Zustände (17) des Weg-Zeit-Zustandsraums ermittelt werden, wobei bevorzugt vorgesehen ist, dass aus diesen Fahrzeug-Geschwindigkeiten die Fahrzeug-Beschleunigungen zwischen zumindest einem Teil dieser Zustände (17) ermittelt werden.

12. Verfahren nach einem der vorhergehenden Ansprüche, **dadurch gekennzeichnet, dass**, zeitlich und/oder örtlich gesehen, im Bereich eines noch folgenden wegstrecken- und/oder zeitbedingten Ereignisses (21) mittels der Recheneinrichtung (13) eine Zwischensuche durchgeführt wird, mittels der die in diesem Bereich optimale Fahrzeugführung ermittelt wird, wobei bevorzugt vorgesehen ist, dass mittels der Zwischensuche die optimale Fahrzeug-Geschwindigkeit und/oder Fahrzeug-Beschleunigung in diesem Bereich ermittelt wird.

13. Fahrerassistenzsystem, insbesondere Grüne-Welle-Assistent und/oder Fahrzeug-Verzögerungs-Assistent, zur Durchführung eines Verfahrens nach einem der vorhergehenden Ansprüche.

14. Fahrzeug, insbesondere Nutzfahrzeug, mit einem Fahrerassistenzsystem nach Anspruch 13.

## Claims

1. Method for calculating optimum vehicle guidance, in particular guidance of a utility vehicle, in which a path-searching algorithm is executed by means of a computing device (13), by means of which path-searching algorithm a path which is optimized with respect to at least one defined optimization parameter is determined between a starting point (5) and a destination point (7) of a driving route (3), wherein the optimized path (23) is calculated as a function of traffic-relevant, route-conditioned events (21), wherein traffic-relevant time-conditioned events (21) are also taken into account during the calculation of the optimized path (23), **characterized in that** the optimized path (23) is determined by means of the path-searching algorithm in a travel/time state space in which a permanently defined or adaptively adjustable travel range and a permanently defined or adaptively adjustable time range are discretized with a defined resolution, wherein the vehicle (1) can assume at least some of the states (17) in the travel/time state space, wherein the path (23) is determined by linking states (17) which can be assumed, and wherein the starting state (17) of the calculation is the current position of the vehicle (1) on the driving route (3).

2. Method according to Claim 1, **characterized in that** traffic signals which are subjected to closed-loop timing control and/or open-loop timing control and which are displayed by means of, in particular, visual signal display devices (11) are taken into account as time-conditioned events (21), wherein there is preferably provision that the signal display devices (11) are embodied as light signal systems and/or as movable barriers.

3. Method according to Claim 1 or 2, **characterized in that** events which are not subject to open-loop timing control and/or closed-loop timing control, in particular traffic jams and/or brief road closures, are taken into account as time-conditioned events (21).

4. Method according to one of the preceding claims, **characterized in that** the defined optimization parameter is a travel duration and/or a steering time and/or a vehicle energy consumption value and/or wear costs of at least one vehicle brake system, in particular of a service brake system and/or of a parking brake system, and/or **in that** if there are a multiplicity of optimization parameters, the individual optimization parameters are weighted.

5. Method according to one of the preceding claims, **characterized in that** the path-searching algorithm is a Dijkstra algorithm and/or an A* algorithm.

6. Method according to one of the preceding claims, **characterized in that** the occurrence and/or the possibility of occurrence of the driving-route-conditioned and/or time-conditioned events (21) are evaluated statistically.

7. Method according to one of the preceding claims, **characterized in that** at least one speed parameter which defines and/or limits the vehicle speed, in particular at least one vehicle-conditioned and/or driving-route-conditioned speed parameter, is taken into account during the calculation of the optimized vehicle guidance, wherein there is preferably provision that the speed parameter is the maximum and/or minimum speed which can be adopted and/or vehicle dynamics properties and/or the bendiness of the route (3).

8. Method according to one of the preceding claims, **characterized in that** at least one acceleration parameter which limits the vehicle acceleration, in particular at least one vehicle-conditioned and/or driving-route-conditioned acceleration parameter, is taken into account during the calculation of the optimized vehicle guidance, wherein there is preferably provision that the acceleration parameter is vehicle movement dynamics properties and/or the speed and/or the acceleration of at least one vehicle travelling ahead and/or one driving comfort parameter.

9. Method according to one of the preceding claims, **characterized in that** the driving-route-conditioned and/or time-conditioned events (21) are assigned at least approximately to the states (17) of the travel/time state space, and/or **in that** the at least an optimization parameter is assigned to the edges (19) between the states (17), and/or in that the edges (19) are formed linearly between the states (17).

10. Method according to one of the preceding claims, **characterized in that** the time interval (Δt_{B}) in which the calculation is carried out is equal to or shorter, in particular shorter by a multiple, than the time interval (Δt) from one path state (17) which can be assumed during the path search to the next path state (17) of the travel/time state space, and/or **in that** the time interval (Δt_{A}), determined by the resolution, from one state (17) to the next state (17) of the travel/time state space is equal to or shorter, in particular shorter by a multiple, than the time interval (Δt) of a path state (17) which can be assumed during the path search to the next path state (17) of the travel/time state space which can be assumed during the path search, wherein there is preferably provision that if the time interval (Δt_{B}) of the calculation is shorter by a multiple than the time interval (Δt) between two successive path states (17), the calculation is carried out repeatedly in this time interval (Δt).

11. Method according to one of the preceding claims, **characterized in that** the current vehicle speed is assigned to the starting state (17) of the path-searching algorithm, and **in that** the vehicle speeds at at least some of the further states (17) of the travel/time state space are determined starting from this vehicle speed by means of the computing device (13), wherein there is preferably provision that the vehicle accelerations between at least some of these states (17) are determined on the basis of these vehicle speeds.

12. Method according to one of the preceding claims, **characterized in that** in the area, viewed in terms of time and/or location, of an event (21) which is driving-route-conditioned and/or time-conditioned and is yet to occur, the computing device (13) is used to carry out an intermediate search by means of which the vehicle guidance which is optimum in this area is determined, wherein there is preferably provision that the optimum vehicle speed and/or vehicle acceleration are determined in this area by means of the intermediate search.

13. Driver assistance system, in particular a phased traffic light assistant and/or vehicle deceleration assistant, for carrying out a method according to one of the preceding claims.

14. Method, in particular utility vehicle, having a driver assistance system according to Claim 13.

## Revendications

1. Procédé de calcul d'une conduite optimale d'un véhicule, notamment d'une conduite optimale d'un véhicule utilitaire, lors duquel au moyen d'un système de calcul (13), un algorithme de recherche de chemin est exécuté, au moyen duquel un chemin optimisé par rapport à au moins un paramètre d'optimisation défini entre un point de départ (5) et un point de destination (7) d'un trajet (3) est déterminé, le chemin optimisé (23) étant calculé en fonction d'événements (21) conditionnés par le trajet et liés au trafic, dans le calcul du chemin optimisé (23) étant également pris en considération des événements (21) conditionnés par le moment donné liés au trafic, **caractérisé en ce que** le chemin optimisé (23) est recherché au moyen de l'algorithme de recherche de chemin dans une sphère d'état chemin/temps, dans laquelle une zone de route fixement définie ou ajustable par adaptation et un ordre de temps fixement défini ou ajustable par adaptation sont discrétisés avec une résolution définie, le véhicule (1) étant apte à adopter au moins une partie des états (17) dans la sphère d'état chemin/temps, le chemin (23) étant déterminé par interconnexion d'états (17) adoptables et l'état de démarrage (17) du calcul étant la position actuelle du véhicule (1) sur le trajet (3).

2. Procédé selon la revendication 1, **caractérisé en ce que** sont pris en considération en tant qu'événements (21) conditionnés par le moment donné des signaux de trafic réglés dans le temps et/ou commandés dans le temps, affichés par des systèmes de signalisation (11) notamment visuels, dans lequel il est prévu de préférence que les systèmes de signalisation (11) soient conçus sous la forme d'installations de signalisations lumineuses et/ou de barrières déplaçables.

3. Procédé selon la revendication 1 ou 2, **caractérisé en ce que** sont pris en considération en tant qu'événements (21) conditionnés par le moment donné des événements non commandés dans le temps et/ou non réglés dans le temps, notamment des embouteillages et/ou des barrages routiers à court terme.

4. Procédé selon l'une quelconque des revendications précédentes, **caractérisé en ce que** le paramètre d'optimisation défini est une durée de trajet et/ou un temps de conduite et/ou une consommation énergétique du véhicule et/ou des frais d'usure d'au moins un système de freinage du véhicule, notamment d'un système de frein de service et/ou d'un système de frein de stationnement et/ou **en ce que** dans le cas de plusieurs paramètres d'optimisation, les paramètres d'optimisation individuels sont pondérés.

5. Procédé selon l'une quelconque des revendications précédentes, **caractérisé en ce que** l'algorithme de recherche de chemin est un algorithme de Dijkstra et/ou un algorithme A*.

6. Procédé selon l'une quelconque des revendications précédentes, **caractérisé en ce que** la survenance et/ou la franchissabilité des événements (21) liés au trafic conditionnés sur le trajet et/ou conditionnés par le moment donné est statistiquement évaluée.

7. Procédé selon l'une quelconque des revendications précédentes, **caractérisé en ce que** lors du calcul de la conduite optimisée du véhicule, au moins un paramètre fixant la vitesse et/ou un paramètre limitant la vitesse du véhicule, notamment au moins un paramètre de vitesse conditionné par le véhicule et/ou conditionné par le trajet est pris en considération, dans lequel il est prévu de préférence que le paramètre de vitesse soit la vitesse maximale autorisée et/ou minimale requise et/ou réside dans des caractéristiques dynamiques de conduite du véhicule et/ou dans la sinuosité du trajet (3).

8. Procédé selon l'une quelconque des revendications précédentes, **caractérisé en ce que** lors du calcul de la conduite optimisée du véhicule, au moins un paramètre d'accélération limitant l'accélération du véhicule, notamment au moins un paramètre d'accélération conditionné par le véhicule et/ou conditionné par le trajet est pris en considération, dans lequel il est prévu de préférence que le paramètre d'accélération réside dans des caractéristiques dynamiques de conduite du véhicule et/ou soit la vitesse et/ou l'accélération d'au moins un véhicule précédent et/ou un paramètre de confort de conduite.

9. Procédé selon l'une quelconque des revendications précédentes, **caractérisé en ce que** les événements (21) conditionnés par le trajet et/ou conditionnés par le moment donné sont associés au moins approximativement aux états (17) de la sphère d'état chemin/temps et/ou **en ce que** l'au moins un paramètre d'optimisation est associé aux lisières (19) entre les états (17) et/ou **en ce que** les lisières (19) entre les états (17) sont conçues sous forme rectiligne.

10. Procédé selon l'une quelconque des revendications précédentes, **caractérisé en ce que** l'intervalle de temps (Δt_{B}) dans lequel est réalisé le calcul est inférieur ou égal, notamment inférieur d'un multiple à l'intervalle de temps (Δt) d'un état de chemin (17) pouvant être adopté lors de la recherche de chemin vers l'état de chemin (17) suivant de la sphère d'état chemin/temps, et/ou **en ce que** l'intervalle de temps (Δt_{A}), déterminé par la résolution, d'un état (17) à l'état (17) suivant de la sphère d'état chemin/temps est inférieur ou égal, notamment inférieur d'un multiple à l'intervalle de temps (Δt) d'un état de chemin (17) pouvant être adopté lors de la recherche de chemin vers l'état de chemin (17) suivant, pouvant être adopté lors de la recherche d'état, de la sphère d'état chemin/temps, dans lequel il est prévu de préférence que si l'intervalle de temps (Δt_{B}) du calcul est inférieur d'un multiple à l'intervalle de temps (Δt) entre deux états de chemin (17) successifs, le calcul est réalisé plusieurs fois dans ledit intervalle de temps (Δt).

11. Procédé selon l'une quelconque des revendications précédentes, **caractérisé en ce qu'**à l'état de démarrage (17) de l'algorithme de recherche de chemin est associée la vitesse actuelle du véhicule et **en ce que** sur la base de ladite vitesse du véhicule, au moyen du système de calcul (13), les vitesses du véhicule sont déterminées sur au moins une partie des autres états (17) dans la sphère d'état chemin/temps, dans lequel il est prévu de préférence qu'à partir desdites vitesses du véhicule, les accélérations du véhicule entre au moins une partie desdits états (17) soient déterminées.

12. Procédé selon l'une quelconque des revendications précédentes, **caractérisé en ce que** du point de vue conditionné par le moment donné et/ou local, dans la sphère d'un événement (21) restant à venir, conditionné par le trajet et/ou conditionné par le moment donné, il est réalisé au moyen du système de calcul (13) une recherche intermédiaire au moyen de laquelle la conduite optimale du véhicule dans ladite sphère est déterminée, dans lequel il est prévu de préférence qu'au moyen de la recherche intermédiaire, la vitesse optimale du véhicule et/ou l'accélération optimale du véhicule dans ladite sphère soit déterminée.

13. Système d'assistance au conducteur, notamment assistant vague verte et/ou assistant de temporisation du véhicule, destiné à réaliser un procédé selon l'une quelconque des revendications précédentes.

14. Véhicule, notamment véhicule utilitaire, doté d'un système d'assistance au conducteur selon la revendication 13.
